(19) Europäisches Patentamt
European Patent Office
Office européen des brevets

(11) Publication number: **0 135 621**
**B1**

(12) **EUROPEAN PATENT SPECIFICATION**

(45) Date of publication of patent specification: **17.11.88**

(51) Int. Cl.[4]: **C 01 B 33/20**, C 01 B 33/28

(21) Application number: **83304042.1**

(22) Date of filing: **12.07.83**

(54) **Preparation of zeolite ZSM-12.**

(43) Date of publication of application:
**03.04.85 Bulletin 85/14**

(45) Publication of the grant of the patent:
**17.11.88 Bulletin 88/46**

(84) Designated Contracting States:
**BE DE FR GB IT NL**

(56) References cited:
**EP-A-0 002 079**
**EP-A-0 018 089**
**EP-A-0 093 519**
**DE-A-2 213 109**

(73) Proprietor: **MOBIL OIL CORPORATION**
**150 East 42nd Street**
**New York New York 10017 (US)**

(72) Inventor: **Kuehl, Guenter Hinrich**
**1956 Cardinal Lake Drive**
**Cherry Hill New Jersey 08003 (US)**

(74) Representative: **Carpmael, John William Maurice et al**
**CARPMAELS & RANSFORD 43 Bloomsbury Square**
**London, WC1A 2RA (GB)**

**EP 0 135 621 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a new method for preparing zeolite ZSM-12.

Many crystalline zeolites are known, in most cases as aluminosilicates. Some occur (at least so far) only in nature, for instance paulingite and merlinoite; some occur only as a result of synthesis, for instance zeolites A and ZSM-5; and some occur in both natural and synthetic forms, for instance mordenite, a synthetic counterpart of which is known as Zeolon, and faujasite, synthetic counterparts of which are known as zeolites X and Y. Counterparts are of course demonstrated as such by correspondence of their X-ray diffraction data, the indicia by means of which the individuality of a zeolite is established. Such data are a manifestation of the particular geometry of the three-dimensional lattice, formed of $SiO_4$ and in most cases $AlO_4$ tetrahedra crosslinked by the sharing of oxygen atoms and including sufficient cationic complement to balance the resulting negative charge on any $AlO_4$ tetrahedra, of which a zeolite may consist.

The chemical formula of an aluminosilicate zeolite is thus:

$$M_{x/n}:(AlO_2)_x:(SiO_2)_y$$

where M is a cation of valence n and x and y are the number of aluminium and silicon atoms, respectively, in the unit cell (the geometric unit which repeats throughout the extent of the lattice). This expression is however frequently transmuted into the "mole ratio of oxides" form,

$$M_{2/n}O:Al_2O_3:2_{y/x}SiO_2$$

which is of course empirically ascertainable and thus the only formula which can be ascribed to a zeolite when its unit cell contents are unknown. Since the only significant quantity in such a formula is the term 2y/x, and since this term (which is almost invariably a range) can usually be satisfied by many zeolites of widely differing lattice geometry, chemical formula is not uniquely restrictive in establishing the identity of a zeolite. Furthermore, such a formula frequently expresses artefact when empirically derived, the cationic-valence/aluminium-atoms ratio deviating from unity, and it fails to provide for zeolites whose lattice structure can be brought into existence from reaction mixtures from which alumina is excluded. Moreover, both the unit cell formula and the "mole ratio of oxides" formula imply that the geometrical identity which persists between succeeding unit cells is accompanied by their compositional identity.

ZSM-12, the zeolite synthesised according to the invention, is described in DE—OS 2,213,109 and defined by the X-ray diffraction data presented therein. It is known to be capable of existence in an extremely siliceous form, realised by the use of reaction mixtures to which no alumina has been added as such. The present invention aims to produce zeolite ZSM-12 having a silica/alumina lattice mole ratio certainly greater than 225, preferably greater than 500, still more preferably greater than 2000. So far as we are aware the zeolite can exist in the complete absence of lattice aluminium, but proof of this phenomenon must await the advent of a perfectly aluminium-free siliceous reagent for use in the forming solution.

According to the invention, therefore, a method of preparing zeolite ZSM-12 comprises forming a reaction mixture comprising a source of alkali or alkaline earth metal oxide, a source of silica which contains no more than 0.5 g alumina per 100 g silica, $Q_2O$ and water, said mixture containing no added alumina and having an initial pH of 12.5 to 13.2 and an initial composition (in terms of mole ratios of oxides) within the following ranges:

| | |
|---|---|
| $SiO_2/Al_2O_3$ | 200 to ∞ |
| $M_2O/(Q_2O+M_2O)$ | 0 to 0.8 |
| $OH^-/SiO_2$ | 0.1 to 1.2 |
| $H_2O/(Q_2O+M_2O)$ | 50 to 250 |

Where Q is methyltriethylammonium and M is an alkali or alkaline earth metal, and maintaining the mixture under crystallisation conditions until crystals of the zeolite form.

If alumina contamination of silica source is the only source of alumina in the reaction mixture the mole ratio $SiO_2/Al_2O_3$ in the reaction mixture is at least 340. Preferably, however, the mixture has the composition, in terms of mole ratios of oxides:

| | |
|---|---|
| $SiO_2/Al_2O_3$ | 400 to ∞ |
| $M_2O/(Q_2O+M_2O)$ | 0.2 to 0.6 |
| $OH^-/SiO_2$ | 0.2 to 1.0 |
| $H_2O/(Q_2O+M_2O)$ | 60 to 200 |

The crystallisation conditions usually comprise a temperature of 80 to 180°C for a period of 6 hours to 150 days, whilst M is preferably sodium or potassium.

The source of silica advantageously contains no more than 0.4 g alumina per 100 g silica, preferably no more than 0.1 g alumina per 100 g silica. Commercially available silica sources which fulfill the

above-stated requirements regarding alumina content include Ludox "AS" and "LS" (0.03 to 0.07 g alumina/100 g silica); "Q-brand" (0.02 g alumina/100 g silica); and Degussa silica (0.2 g alumina/100 g silica). By contrast the material known as "Hi-Sil" contains about 0.57 g alumina/100 g silica. These quantities of alumina which we cite in respect of the various materials identified by their trade names are, of necessity, approximate.

Zeolite ZSM-12 can be additionally recognised by the formula, in terms of mole ratios of oxides, after dehydration, as follows:

$$(1.0\pm0.4)M_{2/n}O \cdot Al_2O_3 \cdot (20-\infty)SiO_2$$

wherein M is at least one cation having a valence n. It may have Al, Fe, and/or Cr in positions of tetrahedral substitution within the silica lattice. To this extent the latter possesses a negative charge, one excess electron for each such hetero-atom which is balanced by cations. These cations, if present, may be replaced at least in part by other ions using conventional ion exchange techniques. It may be necessary to calcine the crystals prior to ion exchange. Ions introduced to replace the original alkali, alkaline earth and/or organic cations may be any that are desired so long as they can pass through the zeolite's pores. Desired replacing ions are those of hydrogen, ammonium and metals of Groups I through VIII of the Periodic Table. Among the metals, those particularly preferred are rare earth metals, manganese, zinc and those of Group VIII of the Periodic Table.

The X-ray diffraction pattern of ZSM-12 has the following significant lines:

TABLE 1

| Interplanar spacing D(A) | Relative intensity |
|---|---|
| 11.9±0.2 | M |
| 10.1±0.2 | M |
| 4.7±0.1 | W |
| 4.29±0.08 | VS |
| 3.98±0.08 | M |
| 3.87±0.07 | VS |
| 3.49±0.07 | W |
| 3.38±0.07 | M |
| 3.20±0.06 | W |
| 3.05±0.05 | W |
| 2.54±0.03 | W |

These values were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms on the computer associated with the spectrometer. From these, the relative intensities, 100 $I/I_o$, where $I_o$ is the intensity of the strongest line or peak, and d(obs.), the interplanar spacing in A, corresponding to the recorded lines, were determined. In Table 1, the relative intensities are given in terms of the symbols VS=very strong, S=strong, M=medium, and W=weak. This X-ray diffraction pattern is characteristic of all species of ZSM-12. The sodium form as well as other cationic forms reveal substantially the same pattern with some minor shifts in interplanar spacing and variation in relative intensity. Other minor variations can occur, depending on the silicon to aluminium ratio of the particular sample, as well as its degree of thermal treatment.

When, as here, no alumina is added to the forming solution, the only aluminium present in ZSM-12 is derived from impurity in some other component of the crystallisation medium (with the reagents used in the examples hereinbelow, alumina impurities present therein resulted in up to 615 ppm alumina content in the product).

Crystallisation of the zeolite can be carried out at either static or stirred condition in polypropylene jars at 210°F (99°C) or in teflon-lined stainless steel autoclaves. The total useful range of temperatures is 80°C to about 180°C for about 6 hours to 150 days. Thereafter, the crystals are separated from the liquid and recovered. The composition can be prepared utilising materials which supply the appropriate oxide. Such compositions include sodium silicate, silica hydrosol, silica gel, silicic acid, sodium hydroxide, and an organic compound.

The quaternary compound is generally supplied by introducing into the reaction mixture a composition such as the hydroxide, chloride or bromide although it can be supplied from more than one source. The reaction mixture can be prepared either batchwise or continuously. Crystal size and crystallisation time of the new crystalline material will vary with the nature of the reaction mixture employed and the crystallisation conditions.

Synthesis may be facilitated by the presence of at least 0.001 per cent, preferably at least 0.10 per cent and still more preferably at least 1.0 per cent, seed crystals (based on total weight) of crystalline product.

The zeolite prepared in accordance with the invention can be shaped into a wide variety of particle sizes.

In cases where particles are molded, such as by extrusion, the composition can be extruded before drying or partially dried and then extruded.

The zeolite, especially in its metal, hydrogen, ammonium, alkylammonium and arylammonium forms, can be beneficially converted to another form for use as a catalyst or an adsorbant by thermal treatment. This thermal treatment is generally performed by heating one of these forms in an atmosphere such as air, nitrogen, hydrogen, steam, etc., at a temperature of at least 700°F for at least 1 minute and generally not greater than 20 hours to remove part or all of the water and the organic constituent. While subatmospheric pressure can be employed for the thermal treatment, atmospheric pressure is desired for reasons of convenience. The thermal treatment can be performed at a temperature up to about 1700°F. The thermally treated product is particularly useful in the catalysis of certain hydrocarbon conversion reactions.

The zeolite can also be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition, impregnated therein or physically intimately admixed therewith. Such component can be impregnated in or onto it such as, for example, by, in the case of platinum, treating the zeolite with a solution containing a platinum metal-containing ion. Thus, suitable platinum compounds include chloroplatinic acid, platinous chloride and various compounds containing the platinum tetrammine complex.

Simple dehydration can also be performed at lower temperatures, such as room temperature, merely by placing the ZSM-12 zeolite in a vacuum, but a longer time is required to obtain a sufficient amount of dehydration.

In the case of many catalysts, it is desired to incorporate the new crystal with another material resistant to the temperatures and other conditions employed in organic conversion processes. Such materials include active and inactive material and synthetic or naturally occurring materials as well as inorganic materials such as clays, silica and/or metal oxides, and are described at length in our EP—A—1695.

Employing a catalytically active form of ZSM-12 prepared in accordance with this invention which may contain additional hydrogenation components, reforming stocks can be reformed employing a temperature between 700°F (371°C) and 1000°F (538°C). The pressure can be between 100 (7.9 bar) and 1000 (70 bar) psig, but is preferably between 200 (14.8 bar) and 700 psig (49.3 bar). The liquid hourly space velocity is generally between 0.1 and 10, preferably between 0.5 and 4, and the hydrogen to hydrocarbon mole ratio is generally between 1 and 20, preferably between 4 and 12.

The zeolite can also be used for hydroisomerisation of normal paraffins, when provided with a hydrogenation component, e.g. platinum. Hydroisomerisation is carried out at a temperature between 200°F (93.3°C) and 800°F (427°C), preferably 300°F (149°C) to 750°F (399°C), with a liquid hourly space velocity between 0.01 and 2, preferably between 0.25 and 0.50, employing hydrogen such that the hydrogen to hydrocarbon mole ratio is between 1:1 and 5:1. Additionally, the zeolite can be used for olefin or aromatic isomerisation, employing temperatures between 30°F (−1.1°C) and 700°F (371°C).

Other reactions which can be accomplished employing the zeolite of this invention containing a metal, e.g. platinum, include hydrogenation-dehydrogenation reactions and desulfurisation reactions, olefin polymerisation (oligomerisation) and other organic compound conversion such as the conversion of alcohols (e.g. methanol) to hydrocarbon.

In order to illustrate the nature of the invention and the manner of practising it, the following Examples show preparation of highly siliceous zeolite ZSM-12 of good crystallinity.

In the Examples, adsorption data were determined as follows:

A weighed sample of the calcined adsorbant was contacted with adsorbate vapour in an adsorption chamber, evacuated to <1 mm Hg (133 Pa) and contacted with 12 mm Hg (1600 Pa) of water vapour or 20 mm Hg (2666 Pa) of n-hexane or cyclohexane vapour, pressures less than the vapour-liquid equilibrium pressure of the respective adsorbate at room temperature. The pressure was kept constant (within about ±0.5 mm (66.7 Pa)) by addition of adsorbate vapour controlled by a manostat during the adsorption period, which did not exceed about 8 hours. As adsorbate was sorbed the decrease in pressure caused the manostat to open a valve which admitted more adsorbate vapour to the chamber to restore the above control pressures. Sorption was complete when the pressure change was not sufficient to activate the manostat. The increase in weight was calculated as the adsorption capacity of the sample in g/100 g of calcined adsorbant.

Examples 1—3 are summarised in Table 2 wherein sodium hydroxide was dissolved in water, and the methyltriethylammonium chloride solution was added. Finally, Ludox LS (colloidal silica, 30% $SiO_2$) was added.

TABLE 2
Preparation of highly siliceous crystals with MTEAC1

| | Example No. 1 | 2 | 3 |
|---|---|---|---|
| Reaction mixture comp. | | | |
| MTEAC1, 50%, g | 25 | 35.5 | 35.5 |
| NaOH, 97.6%, g | 4.5 | 2.0 | 2.0 |
| Ludox LS, 30% $SiO_2$, g | 144 | 38.2 | 38.2 |
| $H_2O$ | 130 | 178 | 178 |
| Moles/mole of MTEAC1: | | | |
| NaOH | 1.33 | 0.417 | 0.417 |
| $SiO_2$ | 8.73 | 1.63 | 1.63 |
| $H_2O$ | 164 | 106 | 106 |
| Initial pH | 13.19 | 13.12 | 13.11 |
| Aged, hrs/°C | —/— | 144/50 | 144/50 |
| Crystallised, hrs/°C | 210/160 | 141/160 | 141/170 |
| Final pH | 11.30 | 11.45 | 10.93 |
| Product properties | | | |
| Crystallinity of ZSM-12 by X-ray diff., % | 90 | 85 | 95 |
| Sorption, g/100 g: | | | |
| Cyclohexane, 20 Torr | 6.0 | 6.8 | 7.9 |
| n-Hexane, 20 Torr | 5.4 | 6.0 | 6.4 |
| Water, 12 Torr | 9.7 | 3.9 | 1.7 |
| Chemical composition: | | | |
| $SiO_2$, wt% | 88.0 | 87.6 | 90.9 |
| $Al_2O_3$, ppm | 540 | 540 | 490 |
| $Na_2O$, wt % | 0.51 | 0.31 | 0.22 |
| N, wt % | 0.77 | 1.08 | 0.92 |
| Ash, wt % | 90.2 | 87.6 | 91.8 |
| $SiO_2/Al_2O_3$, molar | 2770 | 2760 | 3150 |

Example 4

Sodium hydroxide (97.6%), 2.0 g, and 4.0 g of sodium fluoride were dissolved in 140 g of water. A 50% solution of methyltriethylammonium chloride, 35.5 g, and, finally, a mixture of 38.2 g of Ludox LS (30% $SiO_2$) and 40 g water were added. The mixture was heated at 160°C for 185 hours. The final pH was 11.69. The product, well developed crystals of up to 10 micron length, gave the X-ray diffraction pattern of ZSM-12 (100% crystallinity compared with the reference ZSM-12 sample) and contained a trace of ZSM-5 as impurity. It had the following properties:

| | |
|---|---|
| Sorption capacity, g/100 g: | |
| Cyclohexane, 20 Torr (2666 Pa) | 7.0 |
| n-Hexane, 20 Torr (2666 Pa) | 6.9 |
| Water, 12 Torr (1600 Pa) | 4.3 |
| Chemical composition: | |
| $SiO_2$, wt% | 88.1 |
| $Al_2O_3$, ppm | 615 |
| $Na_2O$, wt% | 0.59 |
| N, wt% | 0.99 |
| F, wt% | 0.16 |
| Ash, wt% | 89.7 |
| $SiO_2/Al_2O_3$, molar | 2435 |

Example 5

Sodium hydroxide (97.6%), 2.3 g, was dissolved in 123.9 g of water, and the solution was mixed with 25.5 g of 50% solution of methyltriethylammonium chloride. Finally, 75.0 g of Ludox LS (30% $SiO_2$) was added. The reaction mixture was heated at 160°C for 387 hours. The final pH was 11.54. The product gave the X-ray diffraction pattern of ZSM-12 (95% crystallinity compared with the reference ZSM-12 sample). It consisted of well-developed crystals, up to 20 microns long, and contained no recognisable crystalline impurity. The properties were:

| | |
|---|---|
| Sorption capacity, g/100 g: | |
| Cyclohexane, 20 Torr (2666 Pa) | 7.6 |
| n-Hexane, 20 Torr (2666 Pa) | 6.9 |
| Water, 12 Torr (1600 Pa) | 3.6 |
| Chemical composition: | |
| $SiO_2$, wt. % | 88.1 |
| $Al_2O_3$, ppm | 515 |
| $Na_2O$, wt. % | 0.42 |
| N, wt. % | 0.92 |
| Ash, wt. % | 89.23 |
| $SiO_2/Al_2O_3$, molar | 2908 |

Example 6

Sodium hydroxide (97.6%), 2.1 g, was dissolved in 66.9 g of water. A 50% solution of methyltriethylammonium chloride, 36.0 g, and, finally 100 g of Ludox LS (30% $SiO_2$) were added. The mixture was heated at 160°C for 326 hours. The final pH was 11.44. The product gave the X-ray diffraction pattern of ZSM-12 (100% crystallinity compared with the reference ZSM-12 sample) and contained a trace of ZSM-5. It had the following properties:

| | |
|---|---|
| Sorption capacity, g/100 g: | |
| Cyclohexane, 20 Torr (2666 Pa) | 8.5 |
| n-Hexane, 20 Torr (2666 Pa) | 8.5 |
| Water, 12 Torr (1600 Pa) | 2.7 |
| Chemical composition: | |
| $SiO_2$, wt. % | 90.1 |
| $Al_2O_3$, ppm | 519 |
| $Na_2O$, wt. % | 0.44 |
| N, wt. % | 0.91 |
| Ash, wt. % | 90.0 |
| $SiO_2/Al_2O_3$, molar | 2950 |

Reaction mixture ratios of Examples 1—6 are summarised in Table 3.

TABLE 3
Reaction mixture ratios

| | Moles/mole MTEAC1 | | | | | | |
|---|---|---|---|---|---|---|---|
| Ex. | $SiO_2$ | NaOH | Anion | $H_2O$ | $OH^-/SiO_2$ | Na/Na+MTEA | $H_2O$/Na+MTEA |
| 1 | 8.73 | 1.33 | — | 164 | 0.152 | 0.571 | 70 |
| 2 | 1.63 | 0.42 | — | 106 | 0.256 | 0.294 | 75 |
| 3 | 1.63 | 0.42 | — | 106 | 0.256 | 0.294 | 75 |
| 4 | 1.63 | 0.42 | 0.81 | 106 | — | 0.551 | 48 |
| 5 | 4.46 | 0.67 | — | 125 | 0.15 | 0.4 | 75 |
| 6 | 4.21 | 0.43 | — | 72 | 0.10 | 0.3 | 45 |

**Claims**

1. A method of preparing zeolite ZSM-12 which comprises forming a reaction mixture comprising a source of alkali or alkaline earth metal oxide, a source of silica which contains no more than 0.5 g alumina per 100 g silica, $Q_2O$ and water, said mixture containing no added alumina or buffering agent and having an initial pH of 12.5 to 13.2 and an initial composition (in terms of mole ratios of oxides) within the following ranges:

| | |
|---|---|
| $SiO_2/Al_2O_3$ | 200 to ∞ |
| $M_2O/(Q_2O+M_2O)$ | 0 to 0.8 |
| $OH^-/SiO_2$ | 0.1 to 1.2 |
| $H_2O/(Q_2O+M_2O)$ | 50 to 250 |

where Q is methyltriethylammonium and M is an alkli or alkaline earth metal, and maintaining the mixture under crystallisation conditions until crystals of the zeolite form.

2. A method according to claim 1 wherein the mole ratio $SiO_2/Al_2O_3$ in the reaction mixture is at least 340.

3. A method according to claim 1 or claim 2 wherein the reaction mixture has the composition, in terms of mole ratios of oxides:

| | |
|---|---|
| $SiO_2/Al_2O_3$ | 400 to ∞ |
| $M_2O/(Q_2O+M_2O)$ | 0.2 to 0.6 |
| $OH^-/SiO_2$ | 0.2 to 1.0 |
| $H_2O/(Q_2O+M_2O)$ | 60 to 200 |

4. A method according to any preceding claim wherein the crystallisation conditions comprise a temperature of 80 to 180°C for a period of 6 hours to 150 days.

5. A method according to claim 5 wherein M is sodium or potassium.

6. A method according to any preceding claim wherein the source of silica contains no more than 0.4 g alumina per 100 g silica.

7. A method according to any preceding claim wherein the source of silica contains no more than 0.1 g alumina per 100 g silica.

**Patentansprüche**

1. Verfahren zur Herstellung eines Zeoliths ZSM-12, bei dem eine Reaktionsmischung gebildet wird, die eine Quelle von Alkali- oder Erdalkalimetalloxid, eine Quelle von Siliziumdioxid, das nicht mehr als 0,5 g Aluminiumoxid pro 100 g Siliziumdioxid enthält, $Q_2O$ und Wasser enthält, wobei diese Mischung kein zugesetztes Aluminiumoxid oder Puffermittel enthält und einen ursprünglichen pH-Wert von 12,5 bis 13,2 und eine ursprüngliche Zusammensetzung (bezogen auf die Molverhältnisse der Oxide) innerhalb der folgenden Bereiche aufweist:

| | |
|---|---|
| $SiO_2/Al_2O_3$ | 200 bis ∞ |
| $M_2O/(Q_2O+M_2O)$ | 0 bis 0,8 |
| $OH^-/SiO_2$ | 0,1 bis 1,2 |
| $H_2O/(Q_2O+M_2O)$ | 50 bis 250 |

worin Q Methyltriethylammonium ist und M ein Alkali- oder Erdalkalimetall ist, und diese Mischung bei Kristallisations-bedingungen gehalten wird, bis sich die Kristalle des Zeoliths bilden.

2. Verfahren nach Anspruch 1, worin das Molverhältnis $SiO_2/Al_2O_3$ in dieser Reaktionsmischung mindestens 340 beträgt.

3. Verfahren nach Anspruch 1 oder Anspruch 2, worin die Reaktionsmischung bezogen auf die Molverhältnisse der Oxide die Zusammensetzung aufweist:

| | |
|---|---|
| $SiO_2/Al_2O_3$ | 400 bis ∞ |
| $M_2O/(Q_2O+M_2O)$ | 0,2 bis 0,6 |
| $OH^-/SiO_2$ | 0,2 bis 1,0 |
| $H_2O/(Q_2O+M_2O)$ | 60 bis 200 |

4. Verfahren nach einem der vorstehenden Ansprüche, worin die Kristallisationsbedingungen eine Temperatur von 80 bis 180°C während eines Zeitraumes von 6 Stunden bis 150 Tagen umfassen.

5. Verfahren nach Anspruch 5, worin M Natrium oder Kalium ist.

6. Verfahren nach einem der vorstehenden Ansprüche, worin die Quelle von Siliziumdioxid nicht mehr als 0,4 g Aluminiumoxid pro 100 g Siliziumdioxid enthält.

7. Verfahren nach einem der vorstehenden Ansprüche, worin die Quelle von Siliziumdioxid nicht mehr als 0,1 g Aluminiumoxid pro 100 g Siliziumdioxid enthält.

**Revendications**

1. Un procédé de préparation de zéolite ZSM-12 qui consiste à former un mélange réactionnel comprenant une source d'oxyde de métaux alcalins ou de métaux alcalino-terreux, une source de silice qui ne contient pas plus de 0,5 g d'alumine pour 100 g de silice, $Q_2O$ et de l'eau, ce mélange ne contenant aucune addition d'alumine ni d'agent tampon et présentant un pH initial de 12,5 à 13,2 et une composition initiale (en termes de rapport molaire des oxydes) comprise dans les intervalles suivants:

| | |
|---|---|
| $SiO_2/Al_2O_3$ | 200 à ∞ |
| $M_2O/(Q_2O+M_2O)$ | 0 à 0,8 |
| $OH^-/SiO_2$ | 0,1 à 1,2 |
| $H_2O/(Q_2O+M_2O)$ | 50 à 250 |

étant entendu que:

Q représente le méthyltriéthylammonium; et

M représente un métal alcalin ou un métal alcalino-terreux, et à maintenir le mélange dans des conditions de cristallisation, jusqu'à ce que se forment des cristaux de la forme zéolitique.

2. Un procédé selon la revendication 1, dans lequel le rapport molaire $SiO_2/Al_2O_3$ dans le mélange réactionnel est au moins égal à 340.

3. Un procédé selon la revendication 1 ou la revendication 2, dans lequel le mélange réactionnel présente la composition, en termes de rapport molaire des oxydes:

| | |
|---|---|
| $SiO_2/Al_2O_3$ | 400 à ∞ |
| $M_2O/(Q_2O+M_2O)$ | 0,2 à 0,6 |
| $OH^-/SiO_2$ | 0,2 à 1,0 |
| $H_2O/(Q_2O+M_2O)$ | 60 à 200 |

4. Un procédé selon l'une quelconque des revendications précédentes, dans lequel les conditions de la cristallisation comprennent une température de 80 à 180°C et une durée de 6 heures à 150 jours.

5. Un procédé selon la revendication 3, dans lequel M représente le sodium ou le potassium.

6. Un procédé selon l'une quelconque des revendications précédentes, dans lequel la source de silice ne contient pas plus de 0,4 g d'alumine pour 100 g de silice.

7. Un procédé selon l'une quelconque des revendications précédentes, dans lequel la source de silice ne contient pas plus de 0,1 g d'alumine pour 100 g de silice.